# EUROPEAN PATENT APPLICATION

(11) **EP 1 052 787 A1**
(43) Date of publication of application: **15.11.2000**
(21) Application number: 99303720.9
(22) Date of filing: 12.05.1999
(51) Int. Cl.: H04B 7/185

(54) **User terminal for use in a mobile communication system with cell broadcast message receiving means**

(71) Applicant: ICO Services Ltd., London W6 9BN (GB)
(72) Inventor: Bains, Navjit Singh, Slough, Berkshire SL3 7PQ (GB)
(74) Representative: Read, Matthew Charles

(57) **Abstract**

A user terminal UT1 stores data relating to a set of carrier frequencies over which it receives broadcast control channel (BCCH) messages. The user terminal receives and stores data relating to a new set of carrier frequencies. As a result, the user terminal is able to monitor and receive BCCH messages over the new set of carrier frequencies.

## Description

The present invention relates to a user terminal for use in a mobile telecommunications system and has particular, but not exclusive, application to a satellite telecommunications network.

Terrestrial mobile systems are well known and a number of different systems have developed which operate according to different standards, both analog and digital. In Europe and the Far East, excluding Japan, and elsewhere, the digital Global System Mobile (GSM) network has become popular, whereas in the USA, networks which operate according to the IS-41 recommendations such as the Advanced Mobile Phone System (AMPS) and the Digital Advanced Mobile Phone System (DAMPS) are used. In Japan, the Personal Handiphone System (PHS) and the Personal Digital Communication (PDC) network are in use. More recently, proposals have been made for a Universal Mobile Telecommunications System (UMTS). These networks are all cellular and land-based but have differences in architecture and use different signalling protocols and transmission frequency bands.

For example in GSM, mobile stations such as mobile telephone handsets communicate with a land-based network over a radio interface. Details of the subscriber are held in the network by a home location register (HLR) and communicated to visitor location registers (VLRs) when the subscriber roams to different parts of the network. Details of the subscriber are also provided to the mobile station by a smartcard known as a subscriber identity module (SIM) which is inserted in the mobile station.

Mobile telecommunication systems have been proposed that use satellite communication links between mobile user terminals and conventional terrestrial networks such as public switched telephone networks (PSTNs) and public land mobile networks (PLMNs). One network known as the IRIDIUM™ satellite cellular system is described in EP-A-0365885 and US Patent No. 5 394 561 (Motorola), which makes use of a constellation of so-called low earth orbit (LEO) satellites, that have an orbital radius of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km. Reference is directed to the ICO™ satellite cellular system described for example in GB-A-2 295 296. With this system, the satellite communications link does not permit communication between adjacent satellites. Instead, a signal from a mobile user terminal such as a mobile handset is directed firstly to the satellite and then directed to a ground station or satellite access node (SAN), connected to conventional land-based telephone networks. This has the advantage that many components of the system are compatible with known digital terrestrial cellular technology such as GSM. Also simpler satellite communication techniques can be used than with a LEO network. Reference is directed to "New Satellites for Personal Communications", Scientific American, April 1998, pp. 60 - 67, for an overview of LEO/MEO satellite networks.

A broadcast control channel (BCCH) is used to send network access information including system time-base data, address of access radio channels (Random Access Channel (RACH), Paging Channel (PCH), Access Grant Channel (AGCH)) and control parameters for radio access. BCCH bursts are sent at regular periods in each beam of each satellite, on one of a plurality of frequencies. Values of these frequencies are stored, by the user terminal, in memory or in the SIM card. They are hard-coded into read-only memory and are fixed at time of manufacture. If, as a result of network agreements, new frequencies become available and the old frequencies become obsolete, either the user terminal or the SIM must be replaced with updated hardware.

The present invention seeks to solve this problem.

According to the present invention there is provided a user terminal for use in a mobile communication system, configured to store a first set of data relating to a first set of radio frequencies and to receive a cell broadcast message broadcast on any one of the first set of radio frequencies characterised in that the user terminal is configured to receive a second set of data relating to a second set of radio frequencies, to store the second set of data and then to receive a cell broadcast message broadcast on any one of the second set radio frequencies.

The cell broadcast message may be broadcast on a broadcast control channel (BCCH) for broadcasting system information.

The user terminal may include storage means to store the first set of data relating to the first set of radio frequencies.

The storage means may be an electrically erasable programmable read-only memory (EEPROM). The storage means may be disposed in a subscriber identity module (SIM) Card.

The user terminal may further comprise means to replace the first set of data in the storage means by the second set of data.

The user terminal may further receiver means to receive data associated with the second set of radio frequencies and to pass the data to the storage means. The receiver means may be configured to receive data that is broadcast over any one of the first set of radio frequencies.

The second set of data may be contained within a message specifically addressed to the user terminal.

The receiver means may be configured to receive the second set of data over a wired data link

The user terminal may be operable to execute a computer program to reconfigure the storage means.

The first set of radio frequencies and the second set of radio frequencies may have at least on radio frequency common to both sets.

The first set of radio frequencies may comprise a single radio frequency.

The second set of radio frequencies may comprise a single radio frequency.

An advantage of this apparatus is that the user terminal can be re-programmed during its lifetime and does not become obsolete should the allocated BCCH frequencies change.

According to the present invention there is also provided a method of re-configuring a user terminal that is operable to receive a cell broadcast message broadcast on any one of a first set of radio frequencies, the method comprising receiving data relating to a second set of radio frequencies, storing the data and referring to the data so as to enable the user terminal to receive a cell broadcast message broadcast on any one of the second set of radio frequencies.

The receiving of the data relating to the second set of radio frequencies may comprise accepting a data packet containing a portion of the data.

The receiving of the data relating to the second set of radio frequencies may comprise receiving a cell broadcast message broadcast on any one of the first set of radio frequencies.

The receiving of the data relating to the second set of radio frequencies may comprise receiving a message that is specifically addressed to the user terminal.

The receiving of the data relating to the second set of radio frequencies may comprise receiving data over a wired data link.

The storing of the data may comprise placing the data in a temporary store.

The storing of the data may comprise writing the data to a non-volatile memory.

The storing of the data may comprise transferring the data from a temporary store and writing the transferred data to the non-volatile memory.

According to the present invention there is further provided a base station for use in a mobile communications system, configured to transmit data relating to a set of radio frequencies to be received by a user terminal and to be stored by the user terminal in memory, so as to allow the user terminal to receive a cell broadcast message broadcast on any one of the set of radio frequencies from a node within the mobile communications system.

The node may be a satellite.

According to the present invention there is further provided apparatus operable to receive a user terminal comprising memory means configured to store a first set of data relating to a first set of radio frequencies, the apparatus being operable to write a second set of data relating to a second set of radio frequencies to the memory means, so as to allow the user terminal to receive a cell broadcast message broadcast on any one of the second set of radio frequencies from a node within a mobile communications system.

The apparatus may be configured to overwrite the first set of data with the second set of data.

According to the present invention there is further provided apparatus operable to receive memory means configured to store a first set of data relating to a first set of radio frequencies, the apparatus being operable to write a second set of data relating to a second set of radio frequencies to the memory means, so as to allow a user terminal provided with the memory means to receive a cell broadcast message broadcast on any one of the second set of radio frequencies from a node within a mobile communications system.

In order that the invention may be more fully understood an embodiment thereof will now be described by way of example with reference to the accompanying drawings, in which:
Figure 1 is a schematic diagram of a satellite telecommunications system together with a local, land-based mobile telecommunications system, in accordance with the invention;
Figure 2 is a schematic diagram of the spot beam pattern produced by one of the satellites on the earth;
Figure 3 is a schematic frequency/time diagram showing time slots for the transmission scheme;
Figure 4 is a schematic diagram of the circuits of satellite 3a;
Figure 5 is a schematic diagram of the cell pattern produced by the spot beams of satellite 3a;
Figure 6 is a schematic diagram of a mobile user terminal;
Figure 7 is a schematic block diagram of the circuits of the user terminal shown in Figure 6;
Figure 8 illustrates a logical tree of relationships between the data categories of BCCH messages;
Figure 9 is a schematic diagram of a 4-cell frequency re-use in a spot beam pattern;
Figure 10 is a schematic of a subscriber identity module comprising different memory modules;
Figure 11 is a process flow diagram for downloading new values of BCCH carrier frequency according to one embodiment of the present invention;
Figure 12 is sequence diagram showing a transfer of a message containing values of BCCH carrier frequency according to a second embodiment of the present invention and
Figure 13 is a schematic diagram of apparatus used to reconfigure the user terminal according to a third embodiment of the present invention.

### Overview of network

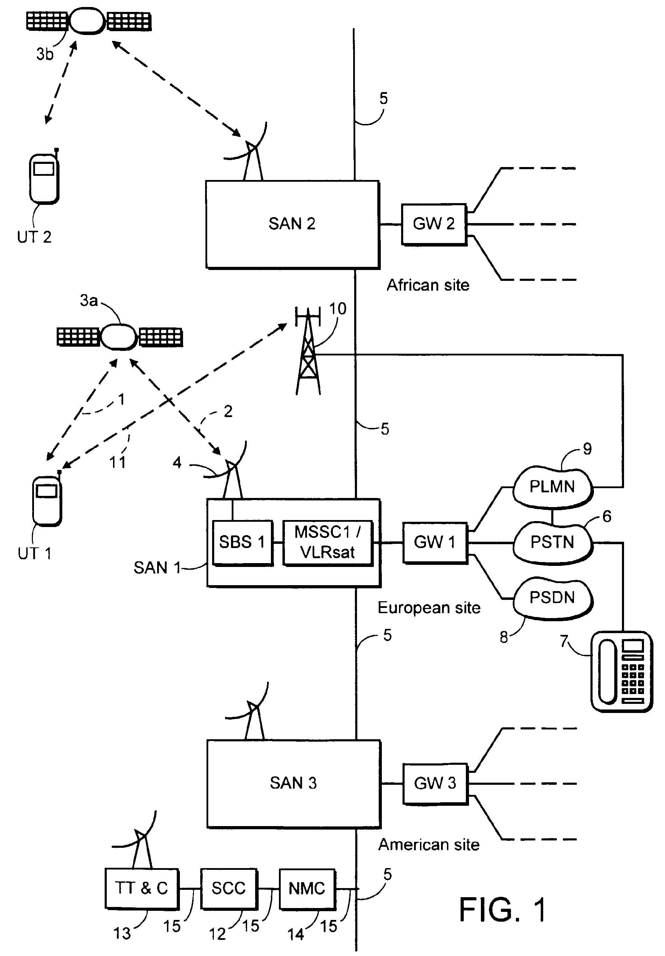

Referring to Figure 1, a schematic block diagram of a satellite mobile telecommunications network is shown corresponding to the ICO™ network. A mobile user terminal UT 1 in the form of a mobile telephone handset can communicate on a radio channel over a communication path 1, 2 via an earth orbiting satellite 3a with a land-based satellite access node SAN 1. As shown schematically in Figure 1, SAN 1 is provided with a dish antenna arrangement that includes antenna 4 which can track the orbiting satellite 3a.

A number of the satellite access nodes SAN 1, 2, 3, etc are connected together to form a backbone network 5, which is connected through a number of gateways GW 1, 2, 3, etc to conventional land-based telephone networks. For example, the gateway GW 1, is connected to a land-based public switch telephone network 6 (PSTN), which permits connection to be made to a conventional telephone set 7. The gateway GW1 is additionally connected to a public switched data network 8 (PSDN) and a public land mobile network 9 (PLMN). Each of the gateways GW 1, 2, 3 may comprise existing International Switching Centres (ISCs) or mobile switching centres (MSCs) of the type used in GSM mobile networks.

As shown in Figure 1, the handset UT 1 is a dual mode device which can also communicate with the conventional land-based mobile network 9, that is shown schematically to include a transceiver station 10 which establishes a duplex link 11 with the user terminal UT 1. In this example, the network 9 is a GSM network. Thus the user can for example roam to the satellite network when out of range of the network 9.

For a fuller understanding of GSM, reference is directed to the various GSM Specifications issued by the European Telecommunications Institute (ETSI). Also reference is directed to "The GSM System for Mobile Communications" by M. Moulet and M-B Pautet (Cell & Sys., Palaiseau, 1992), for a more readable overview, in particular pp79-122 concerning GSM Architecture.

The satellite network is designed to provide world-wide coverage and the satellite 3a forms part of a constellation of satellites, which may be arranged in several orbits. The satellites may be arranged in a MEO constellation, for example with an orbital radius of 10,355 km, although the invention is not restricted to a particular orbital radius. In one example, two orbits of five satellites are used, which can be shown to provide coverage of a major part of the surface of the earth, in which for a 10° satellite elevation angle, one satellite can be accessed by the mobile handset all of the time and two satellites can be accessed for at least 80% of the time, thereby providing more than one concurrent or diverse communication path to the user terminal from a particular SAN. Additional satellites may be included in the constellation in order to provide redundancy and further diversity.

In this embodiment, two satellites 3a, 3b of the constellation are shown in a common orbit and the satellites are tracked by the antenna arrangement 4 of each SAN. The antenna arrangement 4 for each SAN may for example include five dish antennas to track satellites individually, although only one dish is shown for the SANs, in order to simplify the drawing.

The SANs are spaced around the earth in order to provide continuous coverage. In the example shown, SAN 1 may be located in Europe whereas SAN 2 may be located in Africa, SAN 3 in America and other SANs may be located elsewhere.

SAN 1 consists of a satellite base station SBS 1 which is coupled to the dish antenna arrangement 4 for tracking the satellites, the SBS 1 including transmitter and receiver circuits with amplifiers, multiplexers, de-multiplexer and codecs. A mobile satellite switching centre MSSC 1 is coupled to SBS 1 and includes a satellite visitor location register VLR_{SAT} 1. MSSC 1 couples communication signals to the backbone network 5 and to the SBS 1, so as to allow individual telephone calls to be established through the backbone network 5 and the duplex communication link 1, 2 via the satellite 3a, to the mobile terminal UT 1. Also, MSSC 1 is connected to the gateway GW 1 so as to provide a connection to the land based networks 6, 8 and 9. It will be understood that all the SANs are of similar construction with a respective VLR_{SAT} to maintain a record of the subscribers registered, namely the identity of each user that is making use of the SAN 1 as another point for signal communication.

The HLR (not shown) maintains a record for each subscriber including the identity of the VLR_{SAT} with which they are currently registered. The HLR may be an independent unit connected to the backbone network 5. Alternatively, the HLR functionality may be distributed between several VLR_{SAT}.

A service centre (SC) (not shown) co-ordinates sending paging messages to user terminals. The service centre receives an instruction to send a message from a user attached to the PSTN, PLMN or the mobile satellite communication system. The SC retrieves from the HLR, the identity of the VLR_{SAT} to which the subscriber is currently registered and sends the message to the registered SAN to be paged to the user terminal. If the user terminal does not acknowledge receipt of the message, the SC makes a note of this and attempts to page the user later on.

In Figure 1, the SAN 2 is shown communicating with user terminal UT 2 via satellite 3b. For further details of the network, reference is directed to GB-A- 2 295 296 and EP-A-0869628.

The satellites 3a, 3b are in non geo-stationary orbits and comprise generally conventional hardware such as the Hughes HS 601. They may include features disclosed in GB-A-2 288 913.

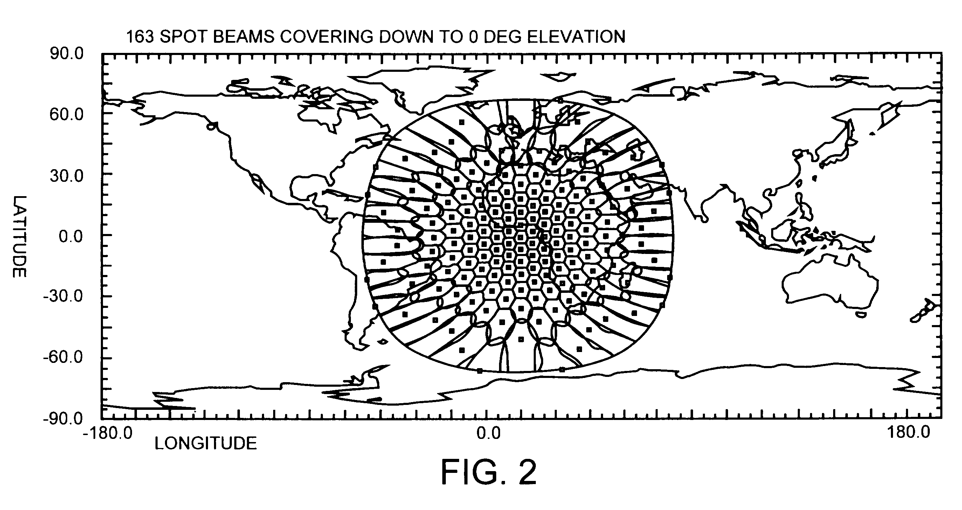

Each satellite 3a, 3b is arranged to generate an array of radio beams each with a footprint on the earth beneath the satellite, each beam including a number of different frequency channels and time slots as described in GB-A-2 293 725. The beams thus provide adjacent cellular areas which correspond to the cells of a conventional land-based mobile telephone network. In this example, each satellite produces a footprint of 163 spot beams on the earth in a fixed pattern as shown in Figure 2, which sweeps over the earth's surface as the satellite moves in its orbit.

The satellites are controlled by means of a satellite control centre 12 (SCC) and a telemetry tracking and control station 13 (TT&C), which are connected to a network management centre 14 (NMC) through a digital network 15 that is coupled to the backbone network 5. In this example, the SCC 12 and the TT&C 13 control operations of the satellites 3a, 3b, e.g. for setting the general transmission power levels and transponder input tuning, as directed by the NMC 14. Telemetry signals for the satellites 3a, 3b are received by the TT&C 13 and processed by the SCC 12 to ensure that the satellites are functioning correctly.

### Channel Configuration

During a telephone call, each of the user terminals communicates with a respective SAN via the satellites. A full duplex communication path is provided between the UT and the SAN. As referred to herein, communication from the SAN to the UT via the satellite is referred to as a "downlink", and communication directed from the UT via the satellite to the SAN is referred to as an "uplink". The signals may travel over diverse paths between UT 1 and SAN 1 via satellite 3a or 3b or both of them concurrently.

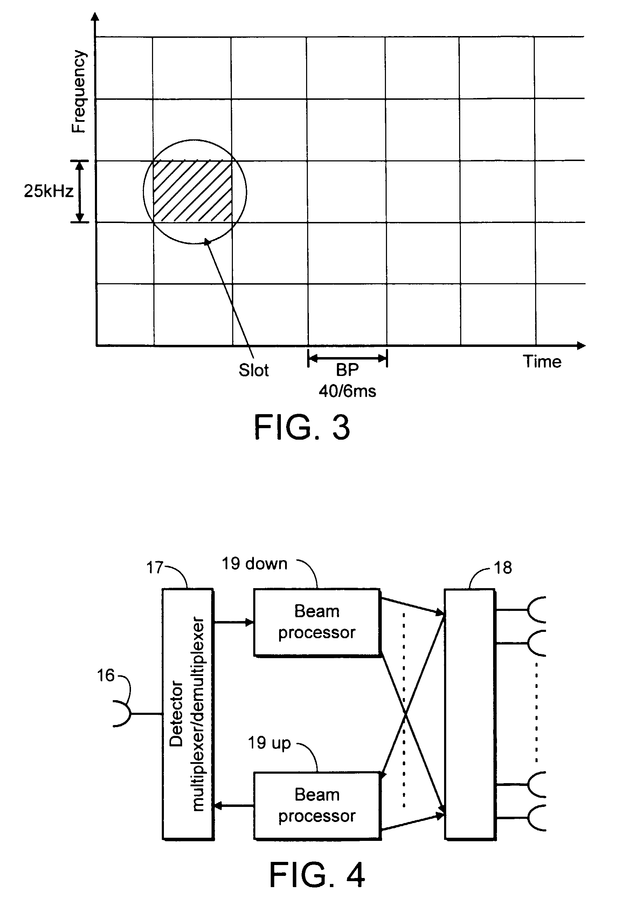

The general configuration of the transmitted signals is similar in some respects to those used for conventional GSM transmissions in a PLMN and makes use of a frequency diverse time division multiple access (TDMA) scheme. The basic unit of transmission between the SAN and UT is a series of about 100 modulated digital symbols, which is referred to as a burst. Bursts each have a finite duration and occupy a finite part of the radio spectrum. Thus, they are sent in time and frequency windows which are referred to as slots. The slots are positioned e.g. every 25kHz and recur in time every 40/6 ms (6.667ms). The duration of each slot is referred to as a burst period or BP. A graphical representation of a slot in the time and frequency domain is shown in Figure 3.

The signal transmission scheme includes channels for providing communication between the UTs individually and one of the SANs via a satellite, together with a number of common channels for all UTs within the cell defined by a particular satellite spot beam. The configuration of some of the signal channels will now be described in more detail.

### Individual Channels

### TCH/SACCH

For speech transmission, data is sent on an individual traffic channel TCH. Each TCH is provided with a slow rate associated control channel or SACCH. Each TCH consists of one slot every 6 BP and comprises a cycle of 25 slots. The SACCH is multiplexed in blocks each consisting of 12 consecutive slots. Two SACCH blocks are transmitted for every 25 slot cycle of the TCH and the remaining slot is used to transmit a timing reference so as to make up a 25 slot SACCH message for each 25 slot cycle of TCH. The TCH/SACCH is transmitted when the UT is in dedicated mode i.e. during a call.

It will be appreciated that with this configuration, 6 TCHs can be interleaved due to the fact that each TCH consists of a slot every 6 BP. The resulting interleaved structure thus provides a frame of 6 TCHs every 6 BP. In contrast to GSM, no frequency hopping is used from slot to slot of the channel.

### Common Channels

In addition to the channels TCH/SACCH for the individual UTs, a number of common channels are provided for all UTs within each cell corresponding to one of the satellite's spot beams, which will now be described in more detail.

### BCCH

A broadcast control channel BCCH is broadcast from the satellite to all UTs within a particular cell. The BCCH provides information which identifies the cell to the UT, which is received by the UT in idle mode i.e. when no call is being made. As each cell has its own BCCH, the relative signal strengths of the BCCHs at the UT can be used to determine which cell may be potentially used for TCH/SACCH communication with the UT.

System information concerning operational parameters for the UTs of a particular cell is transmitted to the UTs in the cell in BCCH messages. Each BCCH message consists of a number e.g. 4 slots, and is transmitted periodically e.g. every 100 BP.

### PCH/AGCH

The common channels also include a downlink paging logical channel PCH. This is used to transmit paging messages to a UT, for example to alert the user of the UT to an incoming call. Also an access grant logical channel AGCH indicates to the UT a channel allocated by the network, to be accessed by the UT for speech communication (TCH/SACCH) in order to receive the incoming call. The PCH consists of e.g. 1 to 10 slots every 25 BP and the AGCH consists of e.g. 2, 4, 6, 8, 10 or 12 slots every 25 BP.

### HPN

In the ICO™ network, an additional high penetration notification (HPN) channel is provided on the downlink for paging in the event that PCH paging is unsuccessful, for example when the reception of the user terminal is partially screened by buildings or the like. Reference is directed to our WO-A-98/23045 in which the HPN system is described in more detail.

### RACH

In addition to these downlink common channels, there is an uplink common channel which allows UTs within a cell to transmit access requests to the network, when it is desired to make a call from the UT. These requests thus occur essentially randomly in time and the channel is accordingly called the random access channel RACH. The RACH consists of e.g. of 2 slots every 3, 4 or 5 BP.

When a call is initiated from the UT, a RACH transmission is made by the UT in order to request a TCH/SACCH for the call from the SAN, and the UT then listens to all AGCH messages from the SAN/satellite to determine details of the channel to be allocated for the call. The AGCH messages comprise two bursts in this example. The UT similarly listens to PCH messages for calls initiated from the network via the SAN. For this purpose, the UT listens to 1 burst every 50, 150, 200, 300, 400 or 600 BPs in order to locate PCH messages.

The common channels are transmitted on beacon frequencies for the cell concerned such that BCCH is transmitted on frequency f1, PCH/AGCH on f2 and RACH on f3. Adjacent cells have different beacon frequencies to distinguish them from one another. In practice, the beacon frequencies may themselves cycle between different values within a respective allocated frequency slot to provide a cw frequency acquisition portion at a first frequency during a first burst period followed by a data burst at a second frequency during a second burst period.

Information concerning the configuration of these variable format common channels is transmitted to the UTs of a particular cell as system information in the BCCH messages in order to allow the operating parameters of the UTs to be set accordingly. Thus, for example, the configuration of the RACH and how the UT should listen to the slots of the PCH are sent to the UTs in the BCCH messages in order to allow the UTs to listen to the channels.

These channel configurations, together with other operating parameters for the UTs in the cell can change with time and data concerning the parameters are sent as system information to the UTs in the BCCH messages from the SANs, as will explained in more detail hereinafter.

### Satellite

A schematic diagram of the major signal processing components of the satellite is given in Figure 4. Signals transmitted from one of the SANs are received by antenna 16 and directed to a detector/multiplexer/demultiplexer circuit 17. It will be understood that the signals transmitted from the SAN to the satellite contains a large number of TCH/SACCHs that are to be directed to individual UTs by the satellite. To this end, the satellite includes an array 18 of antennas that produce individual spot beams (for example 163) that correspond to a cellular configuration as previously described. A beam forming processor circuitry configuration 19_{down} receives the various TCH/SACCHs that are demultiplexed by circuit 17 and assembles them into multiplexed signals directed on 163 outputs to the spot beam antennas 18. The circuitry 19_{down} is also configured to include the downlink common control channels for each of the spot beams, including the BCCH, PCH and AGCH, on the basis of data transmitted to the satellite from the SAN.

For signals on the uplink from the individual UTs to the SAN, the various transmissions including RACH are received by the spot beam antennas 18 and directed to processing circuitry 19ᵤₚ which combines the various channels and passes them to the multiplexer configuration in circuit 17 for transmission through the antenna 16 to the SAN.

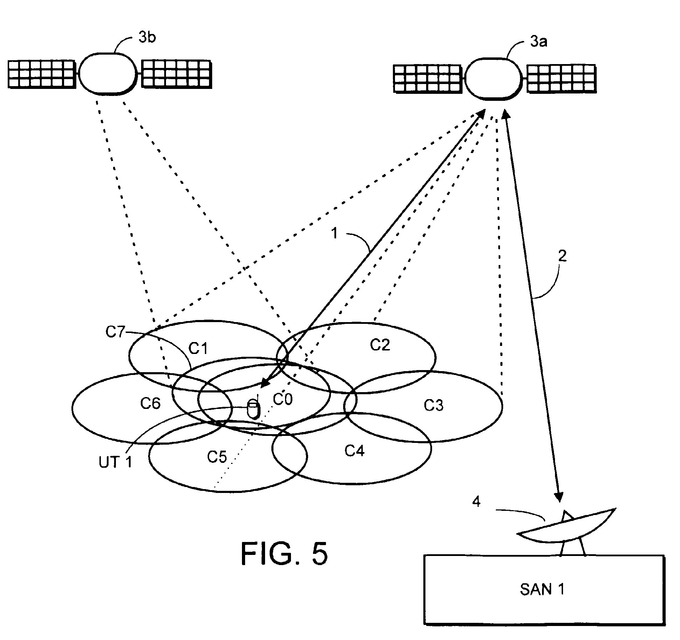

An example of cells C0 - C6 produced by the footprints of seven of the 163 spot beams from antenna 18 is shown schematically in Figure 5. The user terminal UT 1 lies within cell C0 but also can monitor the BCCHs of adjacent cells C1 - C6 and cells produced by other satellites that are within range for example cell C7 produced by satellite 3b.

The SAN 1,2 to satellite 3a, 3b uplinks are located in a frequency band in the region of 5 GHz and the corresponding downlinks are in the region of 7 GHz. The satellite 3a, 3b to UT 1,2 downlinks are in the region of 2.1 GHz and the corresponding uplinks are in the region of 1.9 GHz, although the invention is not restricted to these frequencies.

It will be understood that the foregoing description of the satellite circuitry is schematic and for further details, reference is directed to GB-A-2 288 913 ***supra.***

### User terminal (UT 1)

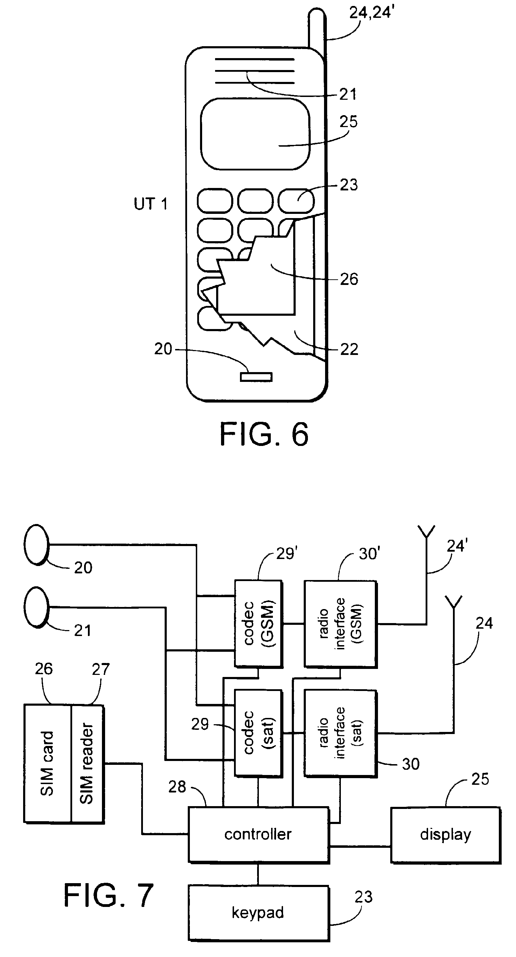

The mobile user terminal UT 1 is shown in more detail in Figures 6 and 7. It comprises a hand held device which is generally similar to a mobile telephone used for conventional terrestrial GSM networks. It is powered by a rechargeable battery (not shown) and is configured to operate either with the local terrestrial cellular network or to roam to the satellite network. Thus, in the example shown in Figure 1, the mobile handset UT 1 can operate either according to a land-based GSM protocol or according to the satellite network protocol. As shown in Figure 7, the handset comprises a microphone 20, an earpiece 21, a battery 22, a keypad 23, antennas 24, 24' and a display 25. The handheld unit UT 1 also includes a subscriber identification module (SIM) smartcard 26. The SIM contains subscriber specific information for amongst other things authenticating the user when a call is made. The SIM also contains details of an access class allocated to the subscriber. As explained hereinafter in more detail, there are ten normal access classes together with five special access classes. The subscriber is placed in one of the access classes by the network operator and the particular, allocated access class is recorded in the SIM.

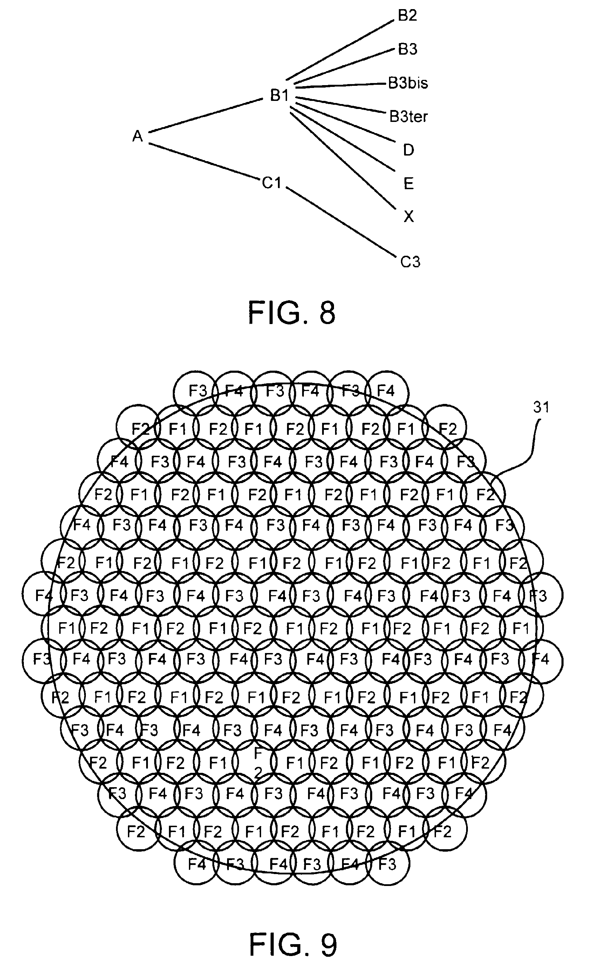

The circuit configuration of the handset UT 1 is shown in block diagrammatic form in Figure 8. The SIM card 26 is received in a SIM card reader 27 coupled to a controller 28, typically a microprocessor. The microphone and loudspeaker 20, 21 are coupled to first and second codecs 29, 29' coupled to conventional radio interfaces 30a, 30b connected to the antennas 24, 24' so as to transmit and receive communication signals, in a manner well known per se. The handset is capable of dual mode operation, with the codec 29, radio interface 30 and antenna 24 being used with the satellite network, and corresponding circuits 29', 30' and 24' being used with the GSM PLMN 9.

### Location Updating

The user terminal, when used with the satellite network can perform a location updating function to provide an estimation of the location of the terminal relative to the earth's surface and to convey the location information to the SAN for use in network initiated access. This is carried out by measuring the propagation delay and Doppler shift for signals received from one or more of the satellites 3 at the user terminal UT 1 using its controller 28. The resulting positional data is then transmitted from the user terminal to the SAN via satellite 3a and stored in VLR_{SAT}. This process is described in more detail in our GB-A-2 321 812.

### Service provision

The described network can provide service to customers in a number of different ways. For example, communication may be provided from UT 1 to UT 2 using the satellite backbone network 5 shown in Figure 1. Alternatively, telephone communication can be established between the telephone set 7 and UT 1 either via SAN 1 and satellite 3a, or, through PLMN 9, antenna 10 and link 11. For a further description of service options, reference is directed to our EP-A-0869628.

### BCCH Scheduling

The system information conveyed in the BCCH to UTs within the cell is scheduled in order to optimize the capacity of the BCCH. The UT is provided with the minimum system information needed according to the current status of the cell in order to perform its functions satisfactorily in the dedicated mode. The BCCH system information is classed into different categories A, B, C etc shown in Table 1.

**Table 1**

| Category | Nature of the system information | Function | Permissible delay |
|---|---|---|---|
| A | Cell selection | Information needed | Delay to find a first cell |
| | parameters | to determine the | after switch-on, hence |
| | | potential use of the | delay till first call after |
| | | cell by the UT | switch-on |
| | | (paging, access, barring...) | |
| | | | |
| B1 | Basic idle mode | Information needed | Delay from choice of cell |
| | parameters | to receive the paging | to reception of paging |
| | | channel PCH in the cell | |
| | | | |
| B2 | Supplementary idle | Information needed | Delay from choice of cell |
| | mode parameters | for various secondary | to quick scanning of |
| | | idle mode tasks such | neighbourhood |
| | | as monitoring | |
| | | neighbour cells | |
| | | | |
| B3 | Localization | Information needed | Delay from choice of cell |
| B3bis | parameters | to determine the | to determination whether a |
| B3ter | | localisation and hence | location updating is needed |
| | | deciding when to do a | |
| | | location updating | |
| | | | |
| C1 | Minimal access | Information needed | Delay from switch-on to |
| | parameters | to access the cell | first call |
| | | | |
| C3 | Dedicated mode | Information useful to | Non critical: if not |
| | parameters | have, but not | available, dedicated mode |
| | | absolutely necessary | parameters are defaulted |
| | | before going to | value until received on |
| | | dedicated mode | SACCH |
| | | | |
| D | HPN mode | Information allowing | Non critical |
| | parameters | to go to HP mode, to | |
| | | be stored and used | |
| | | when leaving | |
| | | coverage or switch-on | |
| | | if out of coverage | |
| | | | |
| E | General information | Other information to | Non critical |
| | | be stored and used | |
| | | when out of coverage | |
| | | (for the moment this | |
| | | is limited to the list | |
| | | of BCCH frequencies | |
| | | in a wide area) | |
| | | | |
| X | BCCH carrier | New values of BCCH | Non critical |
| | frequency | carrier frequencies to | |
| | information | replace values | |
| | | currently stored | |

It can be seen from Table 1 that BCCH system information of types A, B1 and C1 are the most critical and are thus transmitted with relatively high priority whereas the other categories can be transmitted with a lesser priority. Thus, category A system information is accessed first by the UT. All the messages sent on the BCCH provide sufficient information to indicate when the next category A message is normally to be transmitted so that the category A data can be reliably detected. As previously mentioned each BCCH message block comprises four non-contiguous slots separated by 100 slots. Thus all the blocks contain data indicating when the next block with A data is to occur, in order to allow reliable detection of the A data. The other categories of data are transmitted in other ones of the BCCH message blocks at individual, generally (but not necessarily) slower rates as compared with the A data blocks and are arranged with a hierarchy as shown in Figure 8. The A blocks contain information concerning the occurrence of the other blocks. In the configuration shown in Figure 8, the A blocks contain data concerning the next occurrence of the B1 and C1 blocks, the B1 blocks contain data concerning the occurrence of the B2, B3, D and E blocks, which are transmitted at individual slower rates, and the C1 blocks contain data concerning the occurrence of the C3 and C4 blocks which are also transmitted at individual rates. This enables the UT to decode the individual categories of blocks reliably and unambiguously. X blocks contain new values of BCCH carrier frequency which the UT will use in the future to monitor for BCCH messages.

### BCCH carrier frequency allocation

Referring to Figure 9, the total number of BCCH carrier frequencies in use, by any one satellite, at any one time is 4, although the invention is not restricted to a particular total number. A field of view 31 of a satellite comprises 163 spot beams and, using 4-cell re-use, each spot beam broadcasts BCCH messages at a different frequency from its neighbours. For example, spot beams use first, second, third and fourth frequencies F1, F2, F3, F4.

The broadcast of BCCH messages by the spot-beams is also time-divided so that not all the spot-beams are illuminated at the same time.

Each satellite 3 in the constellation is allocated a different set of frequencies. This overcomes interference between overlapping spot beams of satellites in the same orbit and between overlapping spot beams of satellites in orthogonal orbits.

The satellite telecommunications system is allocated a total of 30 MHz bandwidth is that is divided into 30 bands, each of 1 MHz and comprising 4 BCCH carrier frequencies of 25 kHz bandwidth, although the invention is not restricted to a particular allocation of total bandwidth, to a particular number of bands nor to a particular number of BCCH carrier frequencies per band. Therefore, there are 120 BCCH carrier frequencies in total, although significantly fewer are in use at any one time. The allocation of a particular carrier frequency to a spot beam is changed every few hours, to account for the fact that certain BCCH carrier frequencies may be barred from use in certain territories, but permitted in others.

### BCCH carrier frequency detection by UT

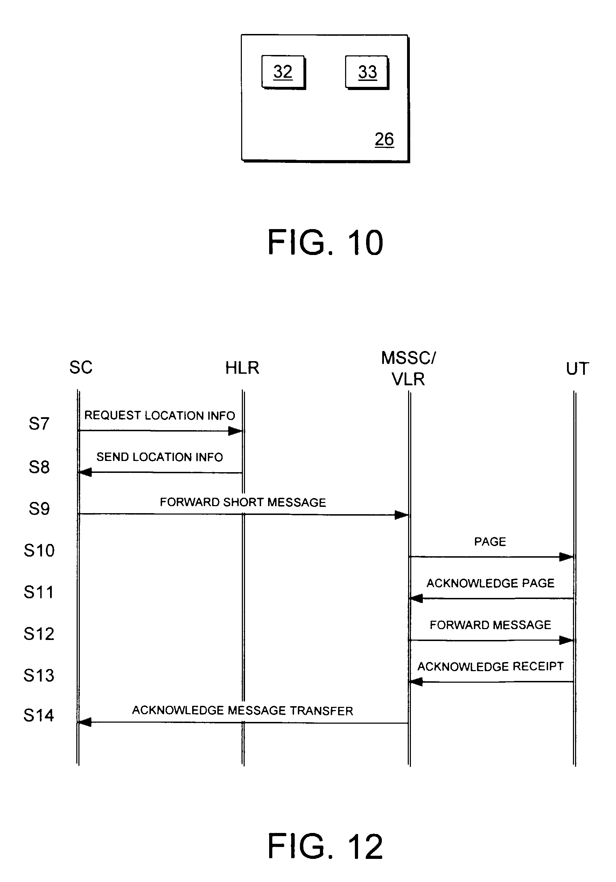

Referring to Figure 10, the set of 120 BCCH carrier frequencies is stored in an electrically erasable programmable read-only memory (EEPROM) 32 located in the SIM card 26. In this example, the EEPROM 32 has a capacity of 16 KB.

Values of BCCH carrier frequency are written to the EEPROM 32 at manufacture. Alternatively they may be programmed at point of sale, using one of the methods described later. The 120 values stored in electrically erasable programmable read-only memory 32 represent the full set of BCCH carrier frequencies that the network potentially may use under one particular set of network agreements. Although this number is quite high, usually, however, the number of BCCH frequencies active in a particular service area -typically defined along national boundaries- is much less, for example 8.

The subscriber identity module card 26 may also comprise a separate programmable read-only memory (PROM) 33 that is programmed only the once, at manufacture, and is used to store permanent data relating to the identity of the subscriber identity module card 26. Alternatively, the EEPROM 32 may be used to hold both temporary and permanent information, with sensitive information being protected by password or other security means. Thus, known SIM cards may be used.

Values of BCCH carrier frequency may be stored in the form of a parameter table occupying a specific block of memory or may be broken up into sub-blocks and distributed throughout memory. Alternatively, the values may be stored either wholly or partially in a dedicated memory module located in the controller 28 of the user terminal UT 1. Values of BCCH carrier frequency are stored as dimensionless multipliers, the multiplicand being the frequency of a local oscillator. Typically, each value is stored as a 22-bit number.

In idle mode, the user terminal UT 1 is configured to scan periodically a specified set of BCCH carrier frequencies to detect if any signal is present. This involves the controller 28 sequentially retrieving 22-bit values of BCCH carrier frequency from the EEPROM 32 and using this to synthesise a reference frequency to tune a superheterodyne receiver (not shown) in the radio interface 30 (Figure 7).

The magnitude of the detected signal strength is measured directly or is measured by passing the detected signal through an analog-to-digital converter, decoding the message and determining the bit-error rate. Once the controller has measured signals for all retrieved values of BCCH carrier frequency, it selects and, provided the signal is strong enough, demodulates the strongest signal. The number of values that are retrieved depends on the whether the user terminal is synchronised with the rest of the network and whether a default frequency is specified. From a cold start, when there is no synchronisation, the controller 28 retrieves all 120 values of BCCH carrier frequency.

System information is extracted from the demodulated BCCH signal. The process of scanning BCCH carrier frequencies is repeated every few minutes.

### Downloading BCCH frequencies over BCCH

New agreements between operators of mobile satellite telecommunications networks, and/or service providers and/or national regulatory bodies may change the spectrum allocated to a mobile satellite communications network for BCCH signalling. If this happens, the set of values of BCCH carrier frequencies stored in the EEPROM 32 should be changed accordingly.

In a first example, values of BCCH carrier frequency are stored in a parameter table in the EEPROM 32. New values of BCCH carrier frequency are broadcast over existing BCCH carrier frequencies as if they were any other system information. To distinguish the nature of this information, it is allocated a new category in BCCH scheduling, Category X shown in Figure 8 and Table 1. This category would be of the lowest priority. This is because a change in allocated BCCH carrier frequencies is likely to be a rare occurrence and to be agreed well in advance before implementation. Thus, the new carrier frequencies may be received over considerable length of time, e.g. several hours or days.

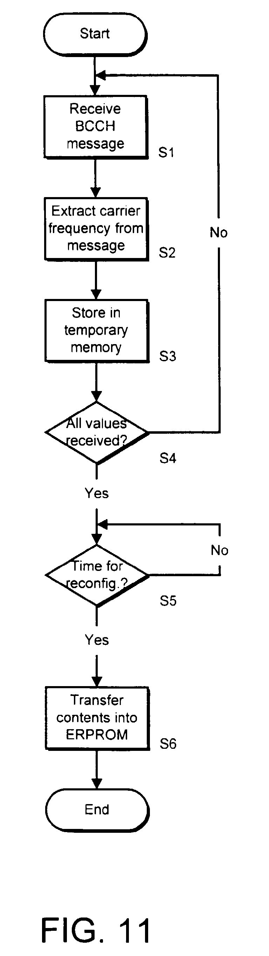

Referring to Figure 11, the user terminal UT 1 receives BCCH messages, sent by a SAN, and extracts the Category X information (Steps S1, S2). The new values of BCCH carrier frequency are stored, as they arrive, in temporary memory located in the controller 28 (Step S3). In addition to the new values of BBCH carrier frequency, data regarding the timing of the changeover to the values is also included. Once all the values have been received, the controller 28 waits until the changeover is due (Steps S4, S5). Once changeover is due, the controller 28 reprograms the EEPROM 32 and burns-in the new values of BCCH carrier frequency (Step S6).

Alternatively, if only a few values of BCCH carrier frequency require updating, the parameter table may be updated on the fly and the new values are programmed directly into the EEPROM 32.

### Downloading BCCH frequencies using a short message service

In a second example, the values of BCCH carrier frequencies may be downloaded using a short message service (SMS). The message is downloaded to the user terminal UT 1 and contains a complete table of BCCH carrier frequencies. As in the previous example, values of BCCH carrier frequency are stored in a parameter table in the EEPROM 32.

The service centre (SC) is instructed by a network operator to send a message comprising new values of BCCH carrier frequency to all user terminals.

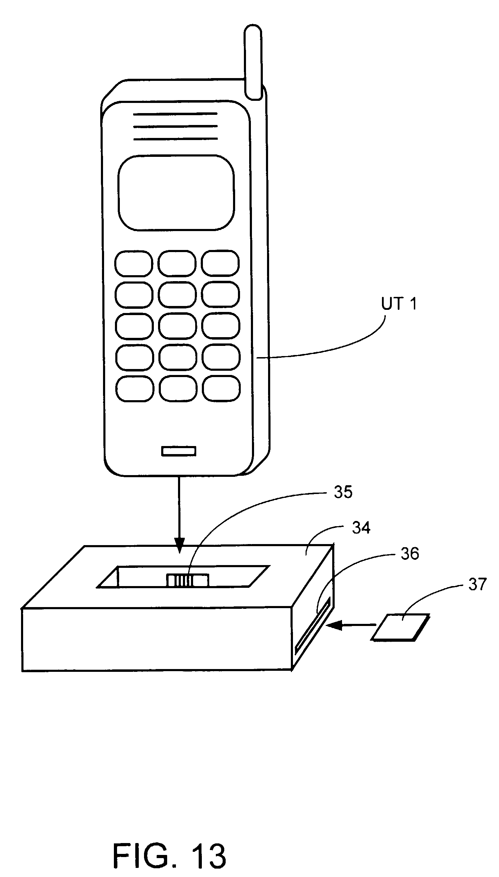

Referring to Figure 12, the SC, which incorporates switching functionality and is attached to the backbone network 5, requests routing information for user terminal UT 1 from the HLR (Step S7). Having received the routing information (Step S8), the service centre forwards the message to the MSSC 1 located in the SAN 1(Step S9). The MSSC 1 sends a page over the radio interface, identifying the user terminal UT 1 (Step S10). The user terminal UT 1 receives the page and acknowledges receipt (Step S11). The MSSC 1 sends the message over the radio interface (Step S12). The user terminal acknowledges receipt of the message (Step S13), which is passed on to the SC (Step S14).

The message comprises a header instructing the controller 28 to replace the contents of the BCCH carrier frequency table, held in the EEPROM 32, with the contents of the message at a specified date and time. The controller 28 executes this instruction accordingly.

This method has the advantage over the method of transfer via BCCH messages of being much quicker and more reliable.

### Downloading BCCH frequencies through a handset cradle

In a third example, values of BCCH carrier frequency are transferred over a wired data link.

Referring to Figure 13, the user terminal UT 1 is placed in a cradle 34. The cradle 34 has a connector 35 that fits a corresponding connector (not shown) located on the underside of the user terminal UT 1. The cradle 34 also comprises a card reader 36, into which a control card 37 is inserted. The control card 37, itself a smart card having an EEPROM, holds the new set of BCCH carrier frequencies to be stored in the EEPROM 32. Once the user terminal UT 1 is inserted, the new set of BCCH carrier frequencies is copied from the control card 37, through the controller 28 and into the electrically EEPROM 32.

This method has the advantage that the control card 37 and the cradle 34 may be held by a representative of network operator, for example a user terminal vendor, who may verify that the new set of BCCH carrier frequencies has be successfully transferred.

Many modifications and variations fall within the scope of the invention.

For example, although reconfiguration of BCCH carrier frequencies has been described in relation to the ICO™ system, it will be appreciated that it could be equally well applied to any of the satellite mobile telecommunications networks described in Scientific American *supra.* The technique could also be applied to a conventional land-based mobile telephone network, for example the network 9 shown in Figure 1. Also, whilst the user terminals UT have been described as mobile telephone handsets, it will be understood that they may be semi-mobile e.g. mounted on a ship or aircraft and may actually be stationary during operation and may handle not only voice calls but also data, facsimile and e-mail.

Reconfiguration of BCCH carrier frequencies may be carried out as many times as necessary. Reconfiguration of BCCH carrier frequencies may involve changing only one or very few carrier frequencies already held in store.

Instead of downloading values of BCCH carrier frequency, the user terminal may download a computer program. The user terminal executes the computer program which re-configures the EEPROM and updates the values of BCCH carrier frequency store within it.

The SIM card, containing the may be removed from the user terminal and re-programmed externally.

The values of BCCH carrier frequency may be transferred over an optical or infrared link.

## Claims

1. A user terminal for use in a mobile communication system, configured to store a first set of data relating to a first set of radio frequencies and to receive a cell broadcast message broadcast on any one of the first set of radio frequencies **characterised in that** the user terminal is configured to receive a second set of data relating to a second set of radio frequencies, to store the second set of data and then to receive a cell broadcast message broadcast on any one of the second set radio frequencies.

2. A user terminal according to claim 1 wherein the cell broadcast message is broadcast on a broadcast control channel (BCCH), for broadcasting system information.

3. A user terminal according to either claim 1 or 2 wherein the user terminal includes storage means to store the first set of data relating to the first set of radio frequencies.

4. A user terminal according to claim 3 wherein the storage means is an electrically erasable programmable read-only memory (EEPROM).

5. A user terminal according to claim 3 or 4 wherein the storage means is disposed in a subscriber identity module (SIM) card.

6. A user terminal according to any one of claims 3 to 5 further comprising means to replace the first set of data in the storage means by the second set of data.

7. A user terminal according to any one of claims 3 to 6 further comprising receiver means to receive data associated with the second set of radio frequencies and to pass the data to the storage means.

8. A user terminal according to claim 7 wherein the receiver means is configured to receive data that is broadcast over any one of the first set of radio frequencies.

9. A user terminal according to claim 8 wherein the second set of data is contained within a message specifically addressed to the user terminal.

10. A user terminal according to claim 7 wherein the receiver means is configured to receive the second set of data sent over wired data link

11. A user terminal according to any one of claims 3 to 10 wherein the user terminal is operable to execute a computer program to reconfigure the storage means.

12. A user terminal according to any preceding claim wherein the first set of radio frequencies and the second set of radio frequencies have at least one radio frequency common to both sets.

13. A user terminal according to any preceding claim wherein the first set of radio frequencies comprises a single radio frequency.

14. A user terminal according to any preceding claim wherein the second set of radio frequencies comprises a single radio frequency.

15. A method of re-configuring a user terminal that is operable to receive a cell broadcast message broadcast on any one of a first set of radio frequencies, the method comprising receiving data relating to a second set of radio frequencies, storing the data and referring to the data so as to enable the user terminal to receive a cell broadcast message broadcast on any one of the second set of radio frequencies.

16. A method according to claim 16 wherein the receiving of the data relating to the second set of radio frequencies comprises accepting a data packet containing a portion of the data.

17. A method according to either claim 15 or 16 wherein the receiving of the data relating to the second set of radio frequencies comprises receiving a cell broadcast message broadcast on any one of the first set of radio frequencies.

18. A method according to either claim 15 or 16 wherein the receiving of the data relating to the second set of radio frequencies comprises receiving a message that is specifically addressed to the user terminal.

19. A method according to either claim 15 or 16 wherein the receiving of the data relating to the second set of radio frequencies comprises receiving data over a wired data link.

20. A method according to anyone of claims 15 to 19 wherein the storing of the data comprises placing the data in a temporary store.

21. A method according to anyone of claims 15 to 20 wherein the storing of the data comprises writing the data to a non-volatile memory.

22. A method according to claim 21 wherein the storing of the data comprises transferring the data from a temporary store and writing the transferred data to the non-volatile memory.

23. A base station for use in a mobile communications system, configured to transmit data relating to a set of radio frequencies to be received by a user terminal and to be stored by the user terminal in memory, so as to allow the user terminal to receive a cell broadcast message broadcast on any one of the set of radio frequencies from a node within the mobile communications system.

24. A base station according to claim 23 wherein the node is a satellite.

25. Apparatus operable to receive a user terminal comprising memory means configured to store a first set of data relating to a first set of radio frequencies, the apparatus being operable to write a second set of data relating to a second set of radio frequencies to the memory means, so as to allow the user terminal to receive a cell broadcast message broadcast on any one of the second set of radio frequencies from a node within a mobile communications system.

26. Apparatus according to claim 25 configured to overwrite the first set of data with the second set of data.

27. Apparatus operable to receive memory means configured to store a first set of data relating to a first set of radio frequencies, the apparatus being operable to write a second set of data relating to a second set of radio frequencies to the memory means, so as to allow a user terminal provided with the memory means to receive a cell broadcast message broadcast on any one of the second set of radio frequencies from a node within a mobile communications system.
